# FASCICULE DE BREVET EUROPEEN

(11) **EP 3 330 520 B1**
(45) Date de publication et mention de la délivrance du brevet: **28.08.2019**
(21) Numéro de dépôt: 17191614.1
(22) Date de dépôt: 18.09.2017
(51) Int. Cl.: F02D 41/00, F02B 37/10, F02N 11/08, F02B 39/16, F01N 9/00, F02B 37/00

(54) **PROCÉDÉ ET SYSTÈME DE PROTECTION D'UNE ROUE D'UN COMPRESSEUR D'UN TURBOCOMPRESSEUR**
VERFAHREN UND SYSTEM ZUM SCHUTZ EINES KOMPRESSORRADS EINES TURBOKOMPRESSORS
METHOD AND SYSTEM FOR PROTECTING A TURBOCHARGER COMPRESSOR WHEEL

(30) Priorité: 05.12.2016 FR 1661948
(43) Date de publication de la demande: 06.06.2018
(73) Titulaire: RENAULT s.a.s., 92100 Boulogne-Billancourt (FR)
(72) Inventeur: DIDIOT, Benjamin, Leamington Spa, Warwickshire CV32 4AP (GB)

(56) Documents cités:
- FR-A1- 2 942 505
- JP-A- H0 942 003
- US-A1- 2013 074 795

## Description

La présente invention concerne un procédé de protection d'une roue d'un compresseur d'un turbocompresseur et un système mettant en oeuvre ledit procédé.

L'invention concerne également un véhicule notamment un véhicule automobile comportant un tel système ainsi qu'un programme d'ordinateur comprenant des instructions de code de programme pour l'exécution des étapes de ce procédé.

FR 2 942 505 A1 décrit un procédé de protection d'une roue de turbine d'un turbocompresseur, le procédé comprenant une étape d'évaluation d'une température de la roue et une étape d'inhibition d'un arrêt du moteur lorsque la température de la roue est supérieure à une température de consigne

Dans un groupe motopropulseur, après la combustion dans un moteur, les gaz d'échappement sont de façon connue collectés dans un collecteur d'échappement. Ils peuvent ensuite être dirigés vers un turbocompresseur permettant d'assurer une suralimentation du moteur. Un tel turbocompresseur est un dispositif formé d'une turbine et d'un compresseur entraîné en rotation par la turbine, par l'intermédiaire d'un arbre également appelé « axe turbo » agencé dans un alésage et qui relie une roue de turbine disposé sur le trajet des gaz d'échappement du moteur à une roue de compresseur agencée sur le trajet d'admission d'air de ce moteur. Une telle roue de compresseur est généralement réalisée selon un procédé de moulage ou par usinage.

Dans le cadre du fonctionnement de ce turbocompresseur, il arrive que ce dernier présente des défaillances résultant de la roue de compresseur et en particulier d'un phénomène lié à une diminution de la dureté de cette roue. Un tel phénomène a pour conséquence de provoquer une augmentation de l'alésage dans lequel est agencé l'axe turbo occasionnant alors un contact de la roue de compresseur avec la paroi du carter dans lequel elle est agencée.

Ce phénomène est engendré par des dépassements répétés de la limite thermique de la roue de compresseur résultant d'arrêts du moteur également appelés « arrêts à chaud ». De tels arrêts sont des arrêts rapides du moteur qui sont réalisés lorsque ce dernier est dans un mode de fonctionnement à fortes sollicitations thermiques. A titre d'exemple, il peut s'agir de la réalisation d'un arrêt du moteur alors qu'un processus de régénération d'un filtre à particules qui est très exothermique est en cours.

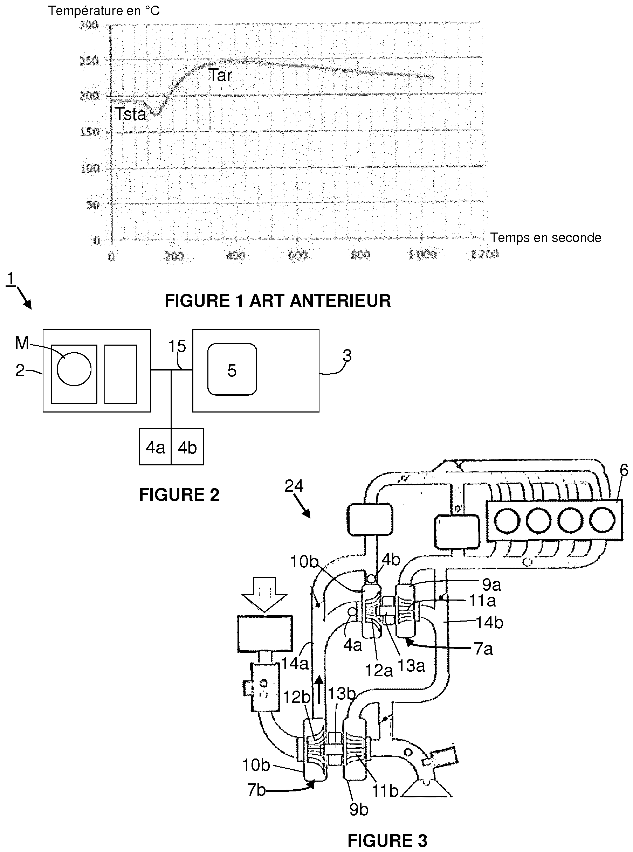

Lors de tels arrêts, la thermique accumulée au niveau de la turbine transite en partie par l'axe turbo augmentant ainsi la température dans le compresseur en particulier au niveau d'une liaison entre la roue de compresseur et cet axe turbo. De plus de tels arrêts du moteur engendrent automatiquement une interruption du fonctionnement du système de lubrification. Ce système de lubrification participe à maintenir la température dans le compresseur et en particulier la température de la roue de compresseur à une température stabilisée Tsta visible sur la figure 1. Ainsi, une telle interruption de fonctionnement de ce système associée au transfert thermique provoquent alors un rebond thermique qui engendre une augmentation de la température Tar de la roue de compresseur au-delà de sa température stabilisée Tsta.

En complément, on notera qu'un tel phénomène est accru dans un contexte où le groupe motopropulseur comprend plusieurs turbocompresseurs comme par exemple deux turbocompresseurs haute-pression et basse-pression agencés dans ce dernier selon un montage série séquentiel. Dans une telle configuration, le phénomène évoqué précédemment est alors amplifié du fait d'une température stabilisée plus importante de la roue de compresseur du turbocompresseur haute-pression. Effectivement, cette augmentation de la température de cette roue découle de la pénétration dans le compresseur du turbocompresseur haute-pression d'un air comprimé et chauffé provenant du turbocompresseur basse-pression. Ainsi dans cette configuration, la température de la roue de compresseur du turbocompresseur haute-pression peut être plus élevée de 75% en comparaison de celle d'une roue de compresseur d'un turbocompresseur unique dispositif de suralimentation d'un groupe motopropulseur.

Pour pallier cet inconvénient, on connaît dans l'état de la technique une solution relative à un procédé d'usinage d'une telle roue de compresseur qui vise à lui donner une meilleure résistance à des températures élevées du fait qu'un tel procédé confère à cette roue des caractéristiques relatives à une déchéance de dureté plus faible.

Toutefois, une telle solution n'est pas toujours adaptée à des processus industriels de fabrication de turbocompresseurs car elle requiert la mise en place d'opérations complexes, longues, coûteuses et fastidieuses pour réaliser un tel usinage.

La présente invention vise à pallier ces inconvénients liés à l'état de la technique.

Dans ce dessein, l'invention concerne un procédé de protection d'une roue de compresseur d'un turbocompresseur notamment d'un turbocompresseur haute-pression d'un groupe motopropulseur d'un véhicule, le procédé comprenant une étape d'évaluation en continue d'une température de la roue et si un moteur du groupe motopropulseur est dans un mode de fonctionnement dommageable pour ladite roue le procédé comprend une étape d'inhibition d'un arrêt du moteur lorsque la température de la roue est supérieure à une température de consigne.

Avantageusement, l'étape d'inhibition comprend :
- une sous-étape de déclenchement de l'inhibition de l'arrêt du moteur dès que la température de la roue est supérieure à la température de consigne, ou
- une sous-étape de déclenchement de l'inhibition de l'arrêt du moteur après une durée pendant laquelle la température de la roue est supérieure à la température de consigne si cette durée est supérieure à une durée de consigne.

En particulier, l'étape d'inhibition comprend une sous-étape d'interruption de l'inhibition de l'arrêt du moteur si une durée pendant laquelle la température de la roue est inférieure ou égale à la température de consigne est supérieure à une durée seuil.

Avantageusement, le procédé comprend une étape de configuration du moteur selon un mode de fonctionnement non-dommageable pour ladite roue si une valeur incrémentée d'un compteur représentatif d'un nombre de fois où le moteur est arrêté lorsque ledit moteur est dans un mode de fonctionnement dommageable pour la roue est supérieure à une valeur de référence.

Avantageusement aussi, le mode de fonctionnement dommageable pour la roue de compresseur est un mode de fonctionnement comprenant :
- un processus de régénération d'un filtre à particules, ou
- un processus de maintien de la température de la roue à une valeur supérieure à celle d'une température seuil pendant une durée qui est supérieure à une durée seuil, ou
- un processus de maintien de la température en aval de la roue à une valeur supérieure à celle d'une température seuil pendant une durée qui est supérieure à une durée seuil

L'invention concerne aussi un système de protection d'une roue de compresseur d'un turbocompresseur notamment d'un turbocompresseur haute-pression d'un groupe motopropulseur d'un véhicule mettant en oeuvre un tel procédé, le système comprenant une unité de traitement et des capteurs de température ainsi qu'un réseau de liaison reliant cette unité de traitement aux capteurs de température.

En particulier ce système comprend un dispositif de contrôle du fonctionnement du moteur relié à ladite unité de traitement par l'intermédiaire du réseau de liaison.

L'invention concerne également un programme d'ordinateur comprenant des instructions de code de programme pour l'exécution des étapes de ce procédé lorsque ledit programme est exécuté par une unité de traitement de ce système de protection.

L'invention concerne aussi un véhicule notamment un véhicule automobile pourvu d'un groupe motopropulseur comprenant un moteur notamment un moteur thermique ou hybride et au moins un turbocompresseur, le véhicule comportant un tel système de protection.

Avantageusement, ce véhicule est équipé d'une fonction « Stop&Start ».

D'autres avantages et caractéristiques de l'invention apparaîtront mieux à la lecture de la description d'un mode de réalisation préféré qui va suivre, en référence aux figures, réalisé à titre d'exemple indicatif et non limitatif :
- la figure 1 représente une courbe relative à l'évolution de la température d'une roue de compresseur dans le temps lors d'un arrêt du moteur thermique dans l'état de la technique ;
- la figure 2 est une représentation schématique d'un système de protection d'une roue d'un compresseur d'un turbocompresseur d'un groupe motopropulseur d'un véhicule, selon le mode de réalisation de l'invention ;

- la figure 3 est une représentation schématique du groupe motopropulseur du véhicule comprenant un ensemble de suralimention comportant un turbocompresseur haute-pression et un turbocompresseur basse-pression, selon le mode de réalisation de l'invention ;
- la figure 4 représente l'ensemble de suralimention comportant les turbocompresseurs haute-pression et basse-pression, selon le mode de réalisation de l'invention, et
- la figure 5 un logigramme d'un procédé de protection de la roue de compresseur du turbocompresseur, selon le mode de réalisation de l'invention.

Dans la description qui va suivre, des chiffres de référence identiques désignent des pièces identiques ou ayant des fonctions similaires.

En référence à la figure 3, le système de protection 1 d'une roue 12a, 12b de compresseur 10a, 10b d'un turbocompresseur 7a, 7b est apte à être mis en oeuvre dans un véhicule. Ce véhicule peut être un véhicule automobile comprenant un groupe motopropulseur 24 pourvu d'un moteur 6 notamment d'un moteur thermique ou d'un moteur hybride comprenant un moteur électrique associé à un moteur thermique. Ainsi le moteur du véhicule met en oeuvre des sources d'énergie telles que des carburants, essence ou diesel, et de l'énergie électrique.

Ce véhicule est équipé d'une fonction dite « Stop & Start » encore appelée « Stop & Go », permettant de couper automatiquement le moteur 6 lors d'un arrêt prolongé et de le redémarrer instantanément et en silence. Par exemple, cette prestation est peut être obtenue par le moyen d'un alterno-démarreur, qui remplace le démarreur classique sans qu'il soit nécessaire de modifier l'architecture classique du moteur 6. S'agissant du moteur hybride, le moteur thermique est susceptible d'être arrêté pendant certaines phases de roulage, et l'alterno-démarreur redémarre alors le moteur thermique après une phase de propulsion électrique. On notera que de manière alternative une telle fonction « Stop & Start » peut également être réalisée par un démarreur renforcé.

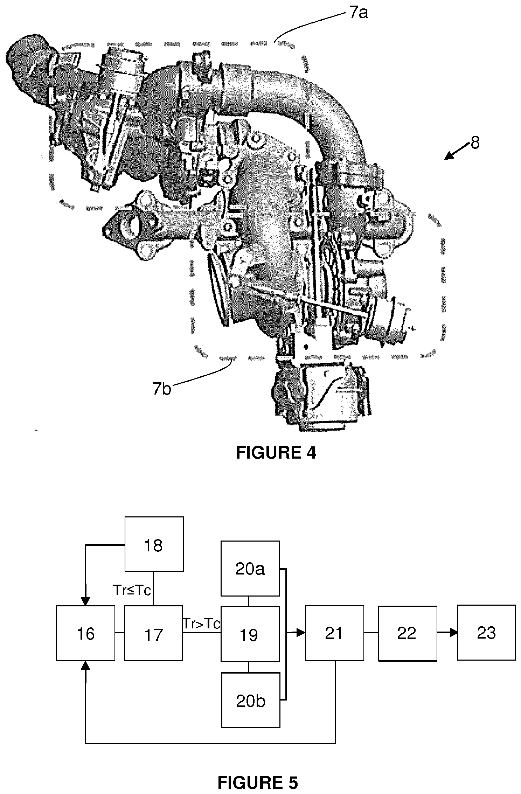

Sur les figures 3 et 4, le groupe motopropulseur 24 du véhicule comprend au moins un turbocompresseur 7a, 7b. Dans le présent mode de réalisation, il en comprend deux, un turbocompresseur haute-pression 7a et un turbocompresseur basse-pression 7b qui sont disposés dans le groupe motopropulseur 24 selon un montage série séquentiel. Le turbocompresseur basse-pression 7b est en général de grande dimension tandis que le turbocompresseur haute-pression 7a est plus petit. Selon cette configuration, chaque turbocompresseur 7a, 7b travaille au plus proche de son rendement optimum en restant dans la plage de régime du moteur thermique 6 qui correspond le mieux à ses caractéristiques de débit. Ainsi, le turbocompresseur haute-pression 7a opère plutôt à bas régimes car la limite de pompage de son compresseur est trouvée à très bas débit De ce fait, il autorise une forte pression de suralimentation à très bas régimes, avec un temps de réponse court. Le turbocompresseur basse-pression 7b opère quant à lui plus à hauts régimes car son compresseur nécessite des débits plus important pour rester dans sa plage de meilleur rendement. A des régimes intermédiaires, les compresseurs basse-pression et haute-pression coopèrent, le premier précomprimant l'air que surcomprime le second, ce qui confère au moteur 6 un ensemble de suralimention 8 ainsi constitué ayant un excellent rendement isentropique.

Dans cette configuration, chaque turbocompresseur 7a, 7b est un dispositif de suralimentation formé d'une turbine 9a, 9b et d'un compresseur 10a, 10b entraîné en rotation par la turbine 9a, 9b, à travers un arbre 13a, 13b reliant une roue 11 a, 11 b de turbine 9a, 9b et la roue 12a, 12b de compresseur 10a, 10b. La roue 11a, 11b de turbine 9a, 9b est disposée sur le trajet des gaz d'échappement du moteur thermique 6 dans la ligne d'échappement 14b et est entraînée en rotation par les gaz s'échappant de ce moteur 6. La roue 12a, 12b de compresseur 10a, 10b est disposée sur le trajet d'admission d'air dans la ligne d'admission d'air 14a du moteur 6. Il compresse l'air injecté dans le moteur 6, permettant une suralimentation du moteur 6 par rapport à un régime d'admission à la pression atmosphérique. On notera qu'une telle roue 12a, 12b de compresseur 10a, 10b peut être fabriquée selon un procédé d'usinage ou de moulage.

Le système de protection 1 comprend une unité de traitement 2, un dispositif de contrôle 3 du fonctionnement du moteur 6 et des capteurs de température 4a, 4b ainsi qu'un réseau de liaison 15 notamment un réseau filaire ou sans fil.

Dans ce système 1, le réseau de liaison 15 relie l'unité de traitement 2, les capteurs de température 4a, 4b et le dispositif de contrôle 3 du fonctionnement du moteur 6 entre eux.

L'unité de traitement 2 comprend des ressources matérielles et logicielles et plus précisément au moins un processeur coopérant avec des éléments de mémoire. Ces ressources matérielles et logicielles sont aptes à exécuter des instructions pour la mise en oeuvre d'un programme d'ordinateur.

Le dispositif de contrôle 3 du fonctionnement du moteur 6 comprend un calculateur 5 qui est apte à piloter différentes composantes du moteur 6 telles que les injecteurs de carburant, des vannes de régulation de l'arrivée de gaz frais dans le moteur 6, des vannes de décharge associées aux turbocompresseurs 7a, 7b, des vannes de recyclage des gaz d'échappement , etc...Ce calculateur 5 est également relié à différents capteurs de contrôle du fonctionnement des composantes du moteur 6.

Un tel dispositif de contrôle 3 est prévu pour piloter le fonctionnement du moteur 6 selon des configurations correspondant à différents modes de fonctionnement de ce moteur 6 dont notamment des modes de fonctionnement du moteur 6 dommageable et non-dommageable pour une roue 12a, 12b de compresseur 10a, 10b décrits par la suite. Ce dispositif 3 est également apte à réaliser l'arrêt du moteur 6 ou le démarrage de ce dernier.
Dans ce mode de réalisation, les capteurs de température 4a, 4b sont de préférence au nombre de deux. Ces capteurs 4a, 4b sont agencés en amont et en aval de la roue 12a de compresseur 10a du turbocompresseur haute-pression 7a. Les termes amont et aval sont définis selon le sens de circulation de l'air dans la ligne d'admission d'air 14a du moteur 6. Ces capteurs 4a, 4b sont de préférence disposés à l'entrée et à la sortie du compresseur du turbocompresseur haute-pression 7a.

En référence à la figure 5, l'invention porte également sur un procédé de protection de la roue 12a, 12b du compresseur 10a, 10b du turbocompresseur 7a, 7b. Pour une meilleure compréhension de l'invention et de manière non limitative, le présent mode de réalisation porte sur la protection de la roue 12a de compresseur 10a du turbocompresseur haute pression 7a lorsque le groupe motopropulseur 24 comprend deux turbocompresseurs 7a, 7b respectivement haute-pression et basse-pression 7a, 7b. On comprend bien que cette protection peut être mise en oeuvre pour toutes les roues 12a, 12b de compresseur 10a, 10b des turbocompresseurs 7a, 7b du groupe motopropulseur 24 ou pour au moins l'une quelconque de ces roues 12a, 12b.

Ce procédé comprend une étape de réception 16 d'une requête relative à une demande d'arrêt du moteur 6. Lors de cette étape 16, l'unité de traitement 2 peut donc recevoir une telle requête dans le cadre de la réalisation de la fonction « Stop & Start » ou de l'arrêt du moteur 6 thermique dans le cas d'une phase de propulsion électrique lorsque le véhicule est équipé du moteur hybride.

Le procédé comprend également une étape d'évaluation 17 en continue d'une température Tr de la roue 12a de compresseur 10a. Cette étape 17 comprend une sous-étape de détermination 18 par l'unité de traitement 2 de températures en amont et en aval Tam, Tav de la roue 12a de compresseur 10a du gaz circulant dans la ligne d'admission d'air 14a du moteur 6.

Plus précisément, ces températures en amont et en aval Tam, Tav sont déterminées à partir de mesures de ces températures Tam, Tav réalisées par les capteurs de température 4a, 4b au niveau respectivement de l'entrée et de la sortie du compresseur 10a et qui sont transmises à l'unité de traitement 2. Dans ce contexte, en première approche, la température Tr de la roue 12a correspond à la moyenne des températures en amont et en aval Tam, Tav de cette roue 12a. On notera que la température Tr de la roue 12a peut être déterminée par des calculs plus élaborés à partir des températures Tam et Tav.

De manière alternative, ces températures Tam, Tav peuvent être estimées à partir de données relatives à un modèle de suralimentation archivées dans les éléments de mémoire de l'unité de traitement 2.

Ce données sont préalablement obtenues par un outil de calcul qui reproduit le fonctionnement de la suralimentation à partir d'éléments comme la températures air et gaz, le débit d'air et de gaz, la pression de l'air et de gaz, et/ou du régime moteur. A partir de ces éléments pouvant être mesurés sur plusieurs moteurs, cet outil de calcul détermine des paramètres plus élaborés dans notre cas, les températures Tam et Tav sans qu'il soit nécessaire de les mesurer au moyen de capteurs.

Le procédé comprend ensuite une étape d'arrêt 18 du moteur si la température Tr de la roue 12a de compresseur 10a est inférieure ou égale à une température de consigne Tc. Dans ces conditions, l'unité de traitement 2 transmet une requête au dispositif de contrôle 3 du fonctionnement du moteur 6 visant à arrêter le moteur 6. Ce moteur 6 peut par la suite être redémarré par le dispositif de contrôle 3 du fonctionnement du moteur 6 dès lors que l'unité de traitement 2 reçoit une requête de mise en marche de ce moteur 6. À la suite de cette étape 18, l'unité de traitement reste en attente d'une nouvelle requête de demande d'arrêt du moteur 6 mise en oeuvre lors de l'étape de réception 16.

Le procédé comprend aussi une étape d'inhibition 19 d'un arrêt du moteur 6 du véhicule lorsque la température Tr de la roue 12a de compresseur 10a est supérieure à la température de consigne Tc si le moteur 6 est dans un mode de fonctionnement dommageable pour ladite roue 12a de compresseur 10a.

Le moteur 6 est dans un mode de fonctionnement dommageable pour la roue 12a de compresseur 10a dès lors que celui-ci met en oeuvre un fonctionnement qui maintien le turbocompresseur 7a, 7b et en particulier la roue 12a de compresseur 10a sous l'effet d'une forte sollicitation thermique lors de l'arrêt du moteur 6. Ce mode de fonctionnement peut alors entraîner des modifications structurelles des éléments composant le turbocompresseur 7a, 7b dont en particulier de la roue 12a de compresseur 10a et ce, lorsqu'un arrêt du moteur 6 est réalisé. Ces modifications structurelles de la roue 12a de compresseur 10a résultent dès lors de dépassements de la limite thermique de cette roue. A titre d'exemple non limitatif et non exhaustif, ce mode de fonctionnement dommageable comprend :
- un processus de régénération d'un filtre à particules, ou
- un processus de maintien de la température Tr de la roue 12a de compresseur 10a à une valeur supérieure à celle d'une température seuil Ts pendant une durée di qui est supérieure à une durée seuil ds, ou
- un processus de maintien de la température Tav en aval de la roue 12a de compresseur 10a à une valeur supérieure à celle d'une température seuil Ts pendant une durée di qui est supérieure à une durée seuil ds.

Dans ce contexte, lors de la réalisation de cette étape 19, l'unité de traitement 2 interdit alors l'arrêt du moteur 6 lorsque la température Tr de la roue 12a de compresseur 10a est supérieure à la température de consigne Tc et ce, si le moteur 6 est dans un mode de fonctionnement où :
- la régénération du filtre à particules est en cours, ou
- la température Tr de la roue est maintenue à une valeur supérieure à celle d'une température seuil Ts pendant la durée di supérieure à la durée seuil ds ou
- la température Tav aval de la roue 12a de compresseur 10a est maintenue à une valeur supérieure à celle d'une température seuil Ts pendant la durée di supérieure à la durée seuil ds

L'étape d'inhibition 19 comprend une sous-étape de déclenchement 20a de l'inhibition de l'arrêt du moteur 6 dès que la température Tr de la roue 12a de compresseur 10a est supérieure à la température de consigne Tc. Autrement dit, dès lors que l'unité de traitement 2 détermine la température Tr et que cette température Tr est supérieure à la température de consigne Tc lors d'un processus de comparaison, elle interdit alors l'arrêt du moteur 6 en n'envoyant pas d'instruction au dispositif de contrôle 3 du moteur 6. Dans ce contexte, l'unité de traitement 2 inhibe l'arrêt du moteur 6 immédiatement après l'établissement de la relation entre les températures Tr de la roue 12a et de consigne Tc c'est-à-dire la température Tr de la roue qui est supérieure à la température de consigne Tc.

De manière alternative, l'étape d'inhibition 19 peut comprendre une sous-étape de déclenchement 20b de l'inhibition de l'arrêt du moteur 6 qui est réalisée après une durée dr pendant laquelle la température Tr de la roue 12a de compresseur 10a est supérieure à la température de consigne Tc si cette durée dr est supérieure à une durée de consigne dc. Autrement dit, l'unité de traitement 2 n'inhibe pas l'arrêt du moteur 6 immédiatement après l'établissement que la température Tr de la roue est supérieure à la température de consigne Tc. En effet, cette inhibition de l'arrêt du moteur 6 est réalisée seulement si un tel rapport entre ces températures Tr et Tc est maintenu pendant une durée dr qui est supérieure à la durée de consigne dc.

Par la suite, l'étape d'inhibition 19 comprend une sous-étape d'interruption de l'inhibition 21 de l'arrêt du moteur 6 si une durée di pendant laquelle la température Tr de la roue 12a de compresseur 10a est inférieure ou égale à la température de consigne Tc, est supérieure à une durée seuil ds. Plus précisément, lors de cette sous-étape 21, l'unité de traitement 2 compare la température Tr à la température de consigne Tc. Dès lors que cette unité de traitement 2 détermine que la température Tr de la roue 12a de compresseur 10a est inférieure ou égale à la température de consigne Tc, elle compare la durée di pendant laquelle cette relation entre ces deux températures Tr, Tc ne varie pas, avec cette durée seuil ds. A compter du moment où l'unité de traitement 2 détermine que la durée di est supérieure à la durée seuil ds, elle déclenche alors l'interruption de l'inhibition de l'arrêt du moteur 6.

Dans ce contexte, le moteur 6 peut être déjà en marche ou être redémarré par le dispositif de contrôle 3 du fonctionnement du moteur 6. À la suite de cette sous-étape 21, l'unité de traitement 2 reste en attente d'une nouvelle requête de demande d'arrêt du moteur 6 mise en oeuvre lors de l'étape de réception 16.

Le procédé comprend aussi une étape de configuration 22 du moteur 6 selon un mode de fonctionnement non-dommageable pour ladite roue 12a de compresseur 10a si une valeur Vi incrémentée d'un compteur représentatif d'un nombre de fois où le moteur 6 est arrêté lorsque ledit moteur 6 est dans un mode de fonctionnement dommageable pour la roue 12a de compresseur 10a, est supérieure à une valeur de référence Vr.

Le moteur 6 est dans un mode de fonctionnement non-dommageable pour la roue 12a de compresseur 10a dès lors que celui-ci met en oeuvre un fonctionnement qui permet de maintenir la température Tr de la roue 12a de compresseur 10a à une valeur qui est inférieure ou égale à la température de consigne Tc. Dans ces conditions, ce mode de fonctionnement vise à ne pas entraîner de modifications structurelle des éléments composant le compresseur 7a, 7b dont en particulier la roue 12a de compresseur 10a et ce, lorsqu'un arrêt du moteur 6 est réalisé. A titre d'exemple non limitatif et non exhaustif, ce mode de fonctionnement dommageable comprend un processus de fonctionnement en sous-régime du moteur 6.

Lors de la réalisation de cette étape 22, l'unité de traitement 2 incrémente la valeur Vi du compteur dès lors que le moteur 6 est arrêté alors qu'il est dans un mode de fonctionnement dommageable pour la roue 12a de compresseur 10a. A chaque incrémentation de la valeur Vi, l'unité de traitement 2 met en oeuvre une comparaison de cette valeur Vi avec la valeur de référence Vr. A compter du moment où l'unité de traitement 2 détermine que cette valeur Vi est supérieure à la valeur de référence Vr, elle transmet une requête au dispositif de contrôle 3 du fonctionnement du moteur 6 afin que ce dernier applique une configuration prédéfinie au moteur 6 visant à le faire marcher selon un mode de fonctionnement non-dommageable pour la roue 12a de compresseur 10a.

On notera qu'une telle étape 22 permet notamment d'assurer une protection optimale de la roue 12a de compresseur 10a lorsque l'arrêt du moteur 6 résulte de manière directe d'un utilisateur du véhicule par exemple à la suite d'un stationnement de ce dernier ou à la suite d'une interruption d'utilisation du véhicule.

Dans cette étape 22, lorsque la valeur Vi est inférieure ou égale à la valeur de référence Vr, l'unité de traitement 2 continue de réaliser à chaque incrémentation une comparaison de ces deux valeurs Vi, Vr entre elles.

Cette étape de configuration 22 comprend une sous-étape d'initialisation 23 du compteur. On notera que cette sous-étape 23 se fait au kilomètre zéro et ne cesse de s'incrémenter tout au long de la vie du moteur et/ou véhicule. Ce compteur n'est pas remis à zéro par la suite sauf lors de changement de certain type de pièce dans le véhicule comme un dispositif de suralimentation tel qu'un turbocompresseur.

On notera que la valeur de référence Vs et les températures de seuil et de consigne Ts, Tc ainsi que les durées de seuil et de consigne ds, dc sont paramétrables et sont définies selon les caractéristiques du moteur 6 du véhicule, du turbocompresseur 7a, du matériau constituant la roue 12a de compresseur 10a et/ou des dimensions de cette roue 12a.

L'invention porte également sur le programme d'ordinateur comprenant des instructions de code de programme pour l'exécution de telles étapes 16 à 23 du procédé lorsque ledit programme est exécuté par l'unité de traitement 2 du système 1.

Ainsi, l'invention permet de préserver la dureté de la roue de compresseur et d'éviter des dépassements de la limite thermique de cette roue.

## Revendications

1. Procédé de protection d'une roue (12a, 12b) de compresseur (10a, 10b) d'un turbocompresseur (7a, 7b) notamment d'un turbocompresseur haute-pression (7a) d'un groupe motopropulseur (24) d'un véhicule, le procédé comprenant une étape d'évaluation (17) en continue d'une température (Tr) de la roue (12a, 12b) et si un moteur (6) du groupe motopropulseur (24) est dans un mode de fonctionnement dommageable pour ladite roue (12a, 12b) le procédé comprend une étape d'inhibition (19) d'un arrêt du moteur (6) lorsque la température (Tr) de la roue (12a, 12b) est supérieure à une température de consigne (Tc).

2. Procédé selon la revendication précédente, **caractérisé en ce que** l'étape d'inhibition (19) comprend :
- une sous-étape de déclenchement (20a) de l'inhibition de l'arrêt du moteur (6) dès que la température (Tr) de la roue (12a, 12b) est supérieure à la température de consigne (Tc), ou
- une sous-étape de déclenchement (20b) de l'inhibition de l'arrêt du moteur (6) après une durée (dr) pendant laquelle la température (Tr) de la roue (12a, 12b) est supérieure à la température de consigne (Tc) si cette durée (dr) est supérieure à une durée de consigne (dc).

3. Procédé selon l'une quelconque des revendications précédentes, **caractérisé en ce que** l'étape d'inhibition (19) comprend une sous-étape d'interruption (21) de l'inhibition de l'arrêt du moteur (6) si une durée (di) pendant laquelle la température (Tr) de la roue (12a, 12b) est inférieure ou égale à la température de consigne (Tc) est supérieure à une durée seuil (ds).

4. Procédé selon l'une quelconque des revendications précédentes, **caractérisé en ce qu'**il comprend une étape de configuration (22) du moteur (6) selon un mode de fonctionnement non-dommageable pour ladite roue (12a, 12b) si une valeur (Vi) incrémentée d'un compteur représentatif d'un nombre de fois où le moteur (6) est arrêté lorsque ledit moteur (6) est dans un mode de fonctionnement dommageable pour la roue (12a, 12b) est supérieure à une valeur de référence (Vr).

5. Procédé selon l'une quelconque des revendications précédentes, **caractérisé en ce que** le mode de fonctionnement dommageable pour la roue (12a, 12b) de compresseur (10a, 10b) est un mode de fonctionnement comprenant :
- un processus de régénération d'un filtre à particules, ou
- un processus de maintien de la température (Tr) de la roue (12a, 12b) à une valeur supérieure à celle d'une température seuil (Ts) pendant une durée (di) qui est supérieure à une durée seuil (ds), ou
- un processus de maintien de la température (Tav) en aval de la roue (12a, 12b) à une valeur supérieure à celle d'une température seuil (Ts) pendant une durée (di) qui est supérieure à une durée seuil (ds).

6. Système de protection (1) d'une roue (12a, 12b) de compresseur (10a, 10b) d'un turbocompresseur (7a, 7b) notamment d'un turbocompresseur haute-pression (7a) d'un groupe motopropulseur (24) d'un véhicule mettant en oeuvre le procédé selon l'une quelconque des revendications précédentes, le système (1) comprenant une unité de traitement (2) et des capteurs de température (4a, 4b) ainsi qu'un réseau de liaison (15) reliant cette unité de traitement (2) aux capteurs de température (4a, 4b).

7. Système (1) selon la revendication précédente **caractérisé en ce qu'**il comprend un dispositif de contrôle (3) du fonctionnement du moteur (6) relié à ladite unité de traitement (2) par l'intermédiaire du réseau de liaison (15).

8. Programme d'ordinateur comprenant des instructions de code de programme pour l'exécution des étapes du procédé selon l'une quelconque des revendications 1 à 5 lorsque ledit programme est exécuté par une unité de traitement (2) d'un système (1) selon l'une quelconque des revendications 6 et 7

9. Véhicule notamment un véhicule automobile pourvu d'un groupe motopropulseur (24) comprenant un moteur (6) notamment un moteur thermique ou hybride et au moins un turbocompresseur (7a, 7b), le véhicule comportant un système (1) selon l'une quelconque des revendications 6 et 7.

10. Véhicule selon la revendication précédente, **caractérisé en ce qu'**il est équipé d'une fonction « Stop&Start ».

## Patentansprüche

1. Verfahren zum Schutz eines Rades (12a, 12b) eines Kompressors (10a, 10b) eines Turboladers (7a, 7b), insbesondere eines Hochdruck-Turboladers (7a) eines Antriebsstranges (24) eines Fahrzeugs, wobei das Verfahren einen Schritt der kontinuierlichen Ermittlung (17) einer Temperatur (Tr) des Rades (12a, 12b) umfasst, und falls sich ein Motor (6) des Antriebsstranges (24) in einer für das Rad (12a, 12b) schädlichen Betriebsart befindet, das Verfahren einen Schritt der Verhinderung (19) eines Abstellens des Motors (6) umfasst, wenn die Temperatur (Tr) des Rades (12a, 12b) höher als eine Solltemperatur (Tc) ist.

2. Verfahren nach dem vorhergehenden Anspruch, **dadurch gekennzeichnet, dass** der Schritt der Verhinderung (19) umfasst:
- einen Teilschritt der Auslösung (20a) der Verhinderung des Abstellens des Motors (6), sobald die Temperatur (Tr) des Rades (12a, 12b) höher als die Solltemperatur (Tc) ist, oder
- einen Teilschritt der Auslösung (20a) der Verhinderung des Abstellens des Motors (6) nach einer Dauer (dr), während der die Temperatur (Tr) des Rades (12a, 12b) höher als die Solltemperatur (Tc) ist, falls diese Dauer (dr) länger als eine Solldauer (dc) ist.

3. Verfahren nach einem der vorhergehenden Ansprüche, **dadurch gekennzeichnet, dass** der Schritt der Verhinderung (19) einen Teilschritt der Unterbrechung (21) der Verhinderung des Abstellens des Motors (6) umfasst, falls eine Dauer (di), während der die Temperatur (Tr) des Rades (12a, 12b) kleiner oder gleich der Solltemperatur (Tc) ist, länger als eine Schwellenwertdauer (ds) ist.

4. Verfahren nach einem der vorhergehenden Ansprüche, **dadurch gekennzeichnet, dass** es einen Schritt der Konfigurierung (22) des Motors (6) gemäß einer für das Rad (12a, 12b) unschädlichen Betriebsart umfasst, falls ein inkrementierter Wert (Vi) eines Zählers, der für eine Anzahl von Malen repräsentativ ist, die der Motor (6) abgestellt wird, wenn sich der Motor in einer für das Rad (12a, 12b) schädlichen Betriebsart befindet, größer als ein Referenzwert (Vr) ist.

5. Verfahren nach einem der vorhergehenden Ansprüche, **dadurch gekennzeichnet, dass** die für das Rad (12a, 12b) des Kompressors (10a, 10b) schädliche Betriebsart eine Betriebsart ist, welche umfasst:
- einen Prozess der Regeneration eines Partikelfilters, oder
- einen Prozess des Haltens der Temperatur (Tr) des Rades (12a, 12b) bei einem Wert, der höher als derjenige einer Schwellenwerttemperatur (Ts) ist, während einer Dauer (di), die länger als eine Schwellenwertdauer (ds) ist, oder
- einen Prozess des Haltens der Temperatur (Tav) stromabwärts des Rades (12a, 12b) bei einem Wert, der höher als derjenige einer Schwellenwerttemperatur (Ts) ist, während einer Dauer (di), die länger als eine Schwellenwertdauer (ds) ist.

6. System zum Schutz (1) eines Rades (12a, 12b) eines Kompressors (10a, 10b) eines Turboladers (7a, 7b), insbesondere eines Hochdruck-Turboladers (7a) eines Antriebsstranges (24) eines Fahrzeugs, welches das Verfahren nach einem der vorhergehenden Ansprüche realisiert, wobei das System (1) eine Verarbeitungseinheit (2) und Temperatursensoren (4a, 4b) sowie ein Verbindungsnetz (15), das diese Verarbeitungseinheit (2) mit den Temperatursensoren (4a, 4b) verbindet, umfasst.

7. System (1) nach dem vorhergehenden Anspruch, **dadurch gekennzeichnet, dass** es eine Vorrichtung zur Steuerung (3) des Betriebs des Motors (6) umfasst, die über das Verbindungsnetz (15) mit der Verarbeitungseinheit (2) verbunden ist.

8. Computerprogramm, welches Programmcodeanweisungen zur Ausführung der Schritte des Verfahrens nach einem der Ansprüche 1 bis 5, wenn dieses Programm von einer Verarbeitungseinheit (2) eines Systems (1) nach einem der Ansprüche 6 und 7 ausgeführt wird, umfasst.

9. Fahrzeug, insbesondere Kraftfahrzeug, das mit einem Antriebsstrang (24) versehen ist, der einen Motor (6), insbesondere einen Verbrennungs- oder Hybridmotor, und wenigstens einen Turbolader (7a, 7b) umfasst, wobei das Fahrzeug ein System (1) nach einem der Ansprüche 6 und 7 aufweist.

10. Fahrzeug nach dem vorhergehenden Anspruch, **dadurch gekennzeichnet, dass** es mit einer Stopp-Start-Funktion ausgestattet ist

## Claims

1. Method for protecting an impellor wheel (12a, 12b) of a compressor (10a, 10b) of a turbocharger (7a, 7b) notably of a high-pressure turbocharger (7a) of a propulsion unit (24) of a vehicle, the method comprising a step (17) of continuously evaluating a temperature (Tr) of the impellor wheel (12a, 12b) and if an engine (6) of the propulsion unit (24) is in a mode of operation damaging to the said impellor wheel (12a, 12b), the method comprises a step (19) of inhibiting a shutting-down of the engine (6) when the temperature (Tr) of the impellor wheel (12a, 12b) is above a setpoint temperature (Tc).

2. Method according to the preceding claim, **characterized in that** the inhibiting step (19) comprises:
- a substep (20a) of triggering the inhibiting of the shutting-down of the engine (6) as soon as the temperature (Tr) of the impellor wheel (12a, 12b) is above the setpoint temperature (Tc), or
- a substep (20b) of triggering the inhibiting of the shutting-down of the engine (6) after a duration (dr) during which the temperature (Tr) of the impellor wheel (12a, 12b) is above the setpoint temperature (Tc) if this duration (dr) is longer than a setpoint duration (dc).

3. Method according to either one of the preceding claims, **characterized in that** the inhibiting step (19) comprises a substep (21) of interrupting the inhibiting of the shutting-down of the engine (6) if a duration (di) during which the temperature (Tr) of the impellor wheel (12a, 12b) is less than or equal to the setpoint temperature (Tc) is above a threshold duration (ds).

4. Method according to any one of the preceding claims, **characterized in that** it comprises a step (22) of configuring the engine (6) into a mode of operation that is not damaging to the said impellor wheel (12a, 12b) if an incremented value (Vi) of a counter indicative of a number of times that the engine (6) has been shutdown when the said engine (6) has been in a mode of operation damaging to the impellor wheel (12a, 12b) is above a reference value (Vr).

5. Method according to any one of the preceding claims, **characterized in that** the mode of operation damaging to the impellor wheel (12a, 12b) of the compressor (10a, 10b) is a mode of operation comprising:
- a process of regenerating a particulate filter, or
- a process of keeping the temperature (Tr) of the impellor wheel (12a, 12b) at a value higher than that of a threshold temperature (Ts) for a duration (di) which is higher than the threshold duration (ds), or
- a process of keeping the temperature (Tav) downstream of the impellor wheel (12a, 12b) at a value higher than that of a threshold temperature (Ts) for a duration (di) which is greater than a threshold duration (ds).

6. System (1) for protecting an impellor wheel (12a, 12b) of a compressor (10a, 10b) of a turbocharger (7a, 7b), notably of a high-pressure turbocharger (7a) of a propulsion unit (24) of a vehicle implementing the method according to any one of the preceding claims, the system (1) comprising a processing unit (2) and temperature sensors (4a, 4b) as well as a connecting network (15) connecting this processing unit (2) to the temperature sensors (4a, 4b).

7. System (1) according to the preceding claim, **characterized in that** it comprises a control device (3) for controlling the operation of the engine (6), connected to the said processing unit (2) via the connecting network (15).

8. Computer program comprising program code instructions for executing the steps of the method according to any one of Claims 1 to 5 when the said program is executed by a processing unit (2) of a system (1) according to either one of Claims 6 and 7.

9. Vehicle, notably a motor vehicle, provided with a propulsion unit (24) comprising an engine (6), notably a combustion engine or a hybrid power unit and at least one turbocharger (7a, 7b), the vehicle comprising a system (1) according to either one of Claims 6 and 7.

10. Vehicle according to the preceding claim, **characterized in that** it is fitted with a "Stop and Start" function.
